Europäisches Patentamt

European Patent Office

Office européen des brevets

(11) Veröffentlichungsnummer: **0 371 370 B1**

(19)

(12) **EUROPÄISCHE PATENTSCHRIFT**

(45) Veröffentlichungstag der Patentschrift: **01.09.93**

(21) Anmeldenummer: **89121475.1**

(22) Anmeldetag: **20.11.89**

Verbunden mit 89912960.5/0446235 (europäische Anmeldenummer/Veröffentlichungsnummer) durch Entscheidung vom 04.12.91.

Die Akte enthält technische Angaben, die nach dem Eingang der Anmeldung eingereicht wurden und die nicht in dieser Patentschrift enthalten sind.

(51) Int. Cl.5: **C08G 18/10, C08G 18/83, C08G 18/28, C09J 175/04, C09K 3/10, C09J 5/06**

(54) Verfahren zur Herstellung und Applikation von unter Feuchtigkeitseinwirkung nachvernetzenden Schmelzklebermassen.

(30) Priorität: **29.11.88 DE 3840220**

(43) Veröffentlichungstag der Anmeldung: **06.06.90 Patentblatt 90/23**

(45) Bekanntmachung des Hinweises auf die Patenterteilung: **01.09.93 Patentblatt 93/35**

(84) Benannte Vertragsstaaten: **BE CH DE ES FR GB IT LI NL**

(56) Entgegenhaltungen:
EP-A- 0 193 791     EP-A- 0 261 409
EP-A- 0 300 302     DE-A- 1 595 809
DE-A- 2 651 400     GB-A- 1 104 831
GB-A- 2 137 638

G.Habenicht:"Kleben: Grundlagen, Tecnologie, Anwendungen" Springer- Verlag 1990, s.68 u. 145

(73) Patentinhaber: **Henkel Kommanditgesellschaft auf Aktien**

**D-40191 Düsseldorf(DE)**

(72) Erfinder: **Schulte, Heinz-Günther, Dr.**
**Winsterstrasse 66**
**D-4330 Mülheim 13(DE)**
Erfinder: **Kinzelmann, Hans-Georg, Dr.**
**Nussbaumerstrasse 260**
**D-5000 Köln 30(DE)**
Erfinder: **Fischer, Herbert, Dr.**
**Am Nettchesfeld 14**
**D-4000 Düsseldorf 13(DE)**
Erfinder: **Tauber, Günter, Dr.**
**Haberstrasse 5**
**D-4000 Düsseldorf 13(DE)**

**Beschreibung**

Die Erfindung betrifft Verfahren zur Herstellung und Applikation von unter Feuchtigkeitseinwirkung nachvernetzenden Schmelzkleber- massen, die über terminale NCO-und/oder Alkoxysilangruppen aushärten.

Schmelzkleber erfreuen sich in der Klebetechnik steigender Beliebtheit, da sie wegen ihrer Lösemittelfreiheit keine Umweltprobleme bei der Bearbeitung verursachen und darüber hinaus für Produktionsvorgänge mit kurzen Taktzeiten geeignet sind. Die ursprünglichen Nachteile von Schmelzklebern, d.h. die geringe Temperaturbelastbarkeit der Verklebungen, konnten in neueren Entwicklungen dadurch behoben werden, daß als Schmelzkleber Reaktivsysteme eingesetzt werden, die beim Aufschmelzen unter Molekülaufbau reagieren und dabei zu Stoffen führen, die ein zweites Mal nicht oder nur bei einer wesentlich höheren Temperatur aufgeschmolzen werden können.

Eine wichtige Gruppe derartiger reaktiver Schmelzkleber sind feuchtigkeitsvernetzende Schmelzklebstoffe. Hierunter versteht man im allgemeinen lösemittelfreie Klebstoffe, die nach dem Auftragen auf ein Substrat ihre Endfestigkeit und Wärmestandfestigkeit erreichen, indem sie mit Wasser aus der Atmosphäre oder dem Substrat nachhärten. Die mit Wasser reagierenden Gruppen sind im allgemeinen NCO-Gruppen, vgl. DE-B 24 01 320, EP-B 00 19 159, DE-A 32 36 313, DE-A 33 39 981, US-B 3 991 025, US-B 3 931 077, US-B 4 166 873, EP-A 0 125 008 und EP-A 0 125 009.

Feuchtigkeitshärtende Schmelzkleber können weiterhin erhalten werden, wenn man freie NCO-Gruppen von Prepolymeren mit Aminoalkyl-trialkoxysilanen umsetzt, wobei die Aushärtung dann über Si(OR)$_3$-Endgruppen erfolgt, vgl. H.F. Huber, H. Müller, 11. Münchner Klebstoff- und Veredelungsseminar, Oktober 1986. In diesem Vortrag wurde auch ein feuchtigkeitshärtender Schmelzkleber vorgestellt, der aus einem Polyester als Grundgerüst mit freien OH-Gruppen aufgebaut wurde, und zwar in der Weise, daß die OH-Gruppen zunächst mit mehrfunktionellen Isocyanaten im Überschuß umgesetzt wurden. Die dann vorhandenen freien NCO-Gruppen wurden anschließend mit Aminoalkyltrialkoxysilanen zu sogenannten Silanschmelzklebstoffen umgesetzt. Auf diesem Prinzip beruhende Schmelzklebersysteme sind weiterhin aus der DE-A 37 14 763 sowie aus den japanischen Patentanmeldungen 80 160 074 (C.A. 94, 15 79 29p (1981)), 59 24 767 (C.A. 101, 73 931t (1984)), 59 221 366 (C.A. 102, 150611p (1985)), 59 172 573 (C.A. 102, 96632f (1985)) und 59 174 674 (C.A. 102, 6328q (1985)) bekannt.

Ein Nachteil derartiger Schmelzklebstoffe besteht jedoch darin, daß die Härtungsreaktion nicht oder nicht vollständig ablaufen kann, wenn die zu verklebenden Substrate wasserdampfundurchlässig sind. Man hat daher bereits in der DE-A 34 12 884 versucht, diesen Mangel mit Hilfe eines Primers, im wesentlichen einer Lösung von Hexamethylentetramin in Aceton, zu beseitigen. Der Einsatz eines solchen Primers liefert jedoch insbesondere bei Silan- oder Siloxanvernetzenden Systemen meist unbefriedigende Ergebnisse. Zudem tritt durch das Amin eine in der Praxis störende Geruchsbelästigung auf.

Eine ähnliche Problematik besteht auf dem Gebiet der Fugendichtmassen. Eine wichtige Gruppe von Fugendichtmassen sind Polyurethanprepolymere enthaltende Mischungen, die unter Einwirkung von Luftfeuchtigkeit nachvernetzen und aushärten. Die in derartigen Dichtmassen verwendeten Polyurethanprepolymere entsprechen in ihrem Grundaufbau den auch für Schmelzklebstoffe gebräuchlichen. Ihre Zusammensetzung ist in der Fachliteratur beschrieben, vgl. z.B. Römpp, Enzyklopädie der technischen Chemie, 4. Auflage, Band 14, Seite 262 - 263.

Bei der Verarbeitung von unter Feuchtigkeitszutritt nachvernetzenden Polyurethan-Fugendichtmassen werden dann eine ungenügende Durchhärtung oder unbefriedigend lange Durchhärtungszeiten beobachtet, wenn die abzudichtenden Fugen durch wasserdampfundurchlässige Substrate begrenzt werden.

Die Erfindung ist auf unter Feuchtigkeitseinwirkung nachvernetzende Schmelzkleber- massen der obengenannten Art bzw. Verfahren zu ihrer Herstellung und ihrer Applikation gerichtet, die insbesondere bei der Verklebung bzw. Abdichtung nichtporöser Substrate eine wirksame, schnelle und reproduzierbare Aushärtung ermöglichen.

Diese Aufgabe wird erfindungsgemäß dadurch gelöst, daß man den Schmelzkleber- massen unmittelbar vor der Applikation eine Wasser in bei Arbeitstemperatur reversibler chemischer oder adsorptiver Bindung enthaltende Substanz oder mehrere zumischt.

Zweckmäßigerweise erfolgt die Zusammenführung von Schmelzkleber- massen und Wasser in bei Arbeitstemperatur reversibler chemischer oder adsorptiver Bindung enthaltenden Substanzen in einer 2-Komponenten-Misch- und Dosieranlage mit Statikmischkopf unmittelbar vor der Applikation. Da Schmelzklebstoffe beim Zutritt größerer Mengen an Feuchtigkeit, z.B. bei unsachgemäßer Lagerung, bei der späteren Applikation zum Schäumen neigen, läßt sich mittels dem Gegenstand der Erfindung die Menge des freigesetzten Wassers so minimieren, daß die Schaumbildung vermieden wird, die vorhandene Wassermenge zum Vernetzen jedoch ausreicht.

Unter Arbeitstemperatur ist dabei diejenige Temperatur zu verstehen, bei der die Schmelzkleber bzw. Dichtmassen in hinreichend flüssiger Form vorliegen, so daß sie mit den wasserabgebenden Substanzen mischbar und applizierbar sind.

Als Wasser in bei Arbeitstemperatur reversibler chemischer oder adsorptiver Bindung enthaltende Substanzen, die im folgenden als "wasserabgebende Substanzen" bezeichnet werden, sind im Rahmen der Erfindung solche Substanzen geeignet, die zwischen 0,5 und 25, bevorzugt zwischen 1 und 10 Gew.-% gebundenes Wasser abgeben können. Als wasserabgebende Substanzen im Rahmen der Erfindung können sowohl anorganische als auch organische Substanzen verwendet werden, die Wasser physikalisch oder chemisch gebunden enthalten und dieses bei Umgebungstemperatur oder beim Erhitzen wieder abgeben.

Als anorganische wasserabgebende Substanzen sind Kristallwasser enthaltende Oxide, Hydroxide und Salze von Alkali- und Erdalkalimetallen, von Metallen der dritten Hauptgruppe des Periodensystems und von Nebengruppenelementen bevorzugt, die zweckmäßigerweise in lufttrockenem Zustand eingesetzt werden. Bevorzugt sind weiterhin solche Substanzen, die Kristallwasser im Temperaturbereich von 80 bis 180 °C abgeben und in größeren Mengen gut zugänglich sind. Ein weiterer Gesichtspunkt für die Auswahl der wasserabgebenden Substanzen ist ihre Umweltverträglichkeit. Besonders bevorzugt sind Eisensulfat ($FeSO_4$ x $7H_2O$), Bariumhydroxid ($Ba(OH)_2$ x $8H_2O$), Calciumsulfat ($CaSO_4$ x $2H_2O$), Kupfersulfat ($CuSO_4$ x $5H_2O$), Magnesiumphosphat (($Mg)_3(PO_4)_2$ x $4H_2O$), Natriumsilikat ($Na_2SiO_3$ x $9H_2O$), Kupferacetat (Cu-($CH_3COO)_2$ x $2H_2O$), Natriumcarbonat ($Na_2CO_3$ x $12H_2O$), Natriumphosphat ($Na_3PO_4$ x $12H_2O$), Natriumsulfat ($Na_2SO_4$ x $10H_2O$), Calciumlactat ($Ca(CH_3$-CH(OH)-$COO)_2$ x $5H_2O$).

Eine weitere Klasse von Substanzen, die im Rahmen der Erfindung als wasserabgebende Substanzen eingesetzt werden können, sind anorganische Verbindungen, die Hohlräume oder Kanäle enthaltende Strukturen ausbilden, in denen Wasser gebunden oder eingelagert wird, wobei das Wasser bei Raumtemperatur im wesentlichen dort verbleibt und erst oberhalb der Raumtemperatur oder im Vakuum in größerem Umfang wieder abgegeben wird. Beispiele für solche Verbindungen sind Zeolithe. Gemäß einer weiteren vorteilhaften Ausführungsform der Erfindung kann man als wasserabgebende Substanzen wasserbeladene, insbesondere lufttrockene Molekularsiebe, Polyamide, insbesondere Polyacrylamide, Polyvinylpyrrolidon, Polyurethane sowie hydrophile Polymere wie Cellulosederivate und Stärkederivate verwenden.

Gemäß einer weiteren vorteilhaften Ausführungsform der Erfindung setzt man die wasserabgebenden Substanzen den Schmelzkleber- und/oder Dichtmassen in einer Menge entsprechend einem molaren Verhältnis von reversibel gebundenem Wasser zu terminalen NCO- bzw. Alkoxysilangruppen von 0,6 : 1 bis 10 : 1, vorzugsweise 0,8 : 1 bis 3 : 1, zu.

Der Gegenstand der Erfindung ist auf über terminale NCO-Gruppen aushärtende Schmelzklebermassen auf Basis von Polyurethanprepolymeren anwendbar. Besonders bevorzugt ist die Anwendung auf über terminale Alkoxysilangruppen und/oder NCO-Gruppen aushärtende Schmelzkleber- und/oder Dichtmassen auf Basis thermoplastischer Polymere mit Isocyanat- oder Alkoxysilanendgruppen, insbesondere auf thermoplastische Polymere auf Basis von Polyamiden und/oder Polyurethanen, die Alkoxysilanendgruppen der Formel I

-X-$(CH_2)_n$-Si$(R^1)_p(OR^2)_{3-p}$     (I)

in der

X     eine Gruppe der Formel -S- oder -$NR^3$-, wobei $R^3$  Wasserstoff, Alkyl mit 1 bis 4 Kohlenstoffatomen, Aminomethylen, Aryl oder einen Rest der Formel II

     -$(CH_2)_n$-Si$(R^1)_p(OR^2)_{3-p}$     (II)

n     eine Zahl von 1 bis 4,
p     die Zahl 0, 1 oder 2,
$R^1$     eine Alkylgruppe mit 1 bis 4 Kohlenstoffatomen und
$R^2$     einen Rest aus der von Alkyl mit 1 bis 4 Kohlenstoffatomen und Alkoxyalkylen mit 2 bis 4 Kohlenstoffatomen gebildeten Gruppe
bedeuten,
enthalten.

Weiterhin bevorzugt ist, die wasserabgebenden Substanzen in Mischung mit mit den Schmelzklebermassen verträglichen Harzen und/oder Weichmacher zuzusetzen. Typische Beispiele für derartige Harze sind insbesondere Kohlenwasserstoffharze vom Typ der Coumaron-Inden-Harze, Terpen-Harze, vinylaromatischen Harze und Kolophomiumharze einschließlich Estern der Kolophomiumharze. Die einsetzbaren Weichmacher sind dem Fachmann auf dem Gebiet der Kunststoffe geläufig; typische Beispiele sind Ester der Phthalsäure, Sebacinsäure, Adipinsäure, Phosphorsäure und Citronensäure sowie Fettsäureester, epoxidierte Fettsäureester, chlorierte Paraffine und Sulfonamide.

Beispiele für Schmelzklebstoffe, die durch Reaktion von NCO-Gruppen mit Feuchtigkeit nachvernetzen, finden sich in den Schriften DE-B 24 01 320, EP-B 00 19 159, DE-A 32 36 313, DE-A 33 39 981, US-B 3 991 025, US-B 3 931 077, US-B 4 166 873, EP-A 0 125 008 und EP-A 0 125 009. Hergestellt werden solche Polyurethan-Schmelzklebstoffe üblicherweise durch Umsetzung von Polyolen mit einem Überschuß an Diisocyanaten unter Ausschluß von Feuchtigkeit. Als Diisocyanat-Komponente zum Aufbau von Polyurethanen werden in den meisten Fällen aromatische Diisocyanate verwendet. Beispiele hierfür sind 2,4-Toluylendiisocyanat, 2,6-Toluylendiisocyanat, Isomerengemische von 2,4- und 2,6-Toluylendiisocyanat, Diphenylmethan-4,4'-diisocyanat und 1,5-Naphthylen-diisocyanat. Dagegen spielen aliphatische Diisocyanate, wie das 1,6-Hexan-diisocyanat, eine deutlich kleinere Rolle. Als Polyisocyanate werden Substanzen wie Triphenylmethan,4,4',4''-triisocyanat und Tris-(4-isocyanatophenyl)-thiophosphat verwendet. Eine Vielzahl von Isocyanat-Komponenten für Polyurethan-Klebstoffe sind kommerziell erhältlich.

Als Polyole können sowohl niedermolekulare Verbindungen als auch Produkte mit höherem Molekulargewicht eingesetzt werden. Beispiele für niedermolekulare Verbindungen sind Glykole, Glycerin, Butandiol und Trimethylolpropan. Als Polyole mit höherem Molekulargewicht werden üblicherweise Polyether oder Polyesterpolyole verwendet. Ausgangssubstanzen zur Darstellung von vernetzten Polyesterpolyolen sind beispielsweise Adipinsäure, Phthalsäure, Butylenglykol, Glycerin und Hexantriol. Lineare Polyesterpolyole können durch Umsetzung von Adipinsäure mit Ethylenglykol dargestellt werden. Eine weitere Klasse von Polyolen auf Polyesterbasis ist auf der Basis von hydroxylhaltigem Polyacrylat zugänglich. Polyetherpolyole können durch Umsetzung von Epoxiden mit Alkoholen dargestellt werden. Als Alkohole können zum Beispiel Ethylenglykol, Diethylenglykol, Propylenglykol, Glycerin, Trimethylolpropan, Pentaerythrit, Sorbit, Mannit, Saccharose und Alkylglucoside eingesetzt werden. Als Epoxide können eingesetzt werden beispielsweise Ethylenoxid, Propylenoxid, Butylenoxid, Styroloxid, Cyclohexenoxid, Trichlorbutylenoxid und Epichlorhydrin. Anstelle eines Epoxids kann aber auch Tetrahydrofuran eingesetzt werden. Neben Polyethern und Polyestern können auch Naturstoffe als Polyolkomponente eingesetzt werden, beispielsweise Rizinusöl. Eine Vielzahl von Polyetherpolyolen und Polyesterpolyolen, auch speziell zur Darstellung von Polyurethanen, sind im Handel erhältlich.

Beispiele für über Alkoxysilangruppen aushärtende Schmelzkleber- bzw. Dichtmassen finden sich in dem obengenannten Bericht über das 11. Münchner Klebstoff- und Veredelungsseminar sowie in der DE-A 36 29 237 und weiterhin in den eingangs erwähnten japanischen Patentanmeldungen.

Besonders bevorzugt im Rahmen der Erfindung sind feuchtigkeitsvernetzende Schmelzklebstoffe gemäß DE-A 37 14 763, bei denen es sich um silanisierte Polyamide handelt, die auf dem folgenden Wege erhalten werden können: durch Umsetzung eines Diisocyanats der Formel III

$$OCN\text{-}R^4\text{-}NCO \quad (III)$$

mit einem Alkoxy-alkylenamino- oder -mercaptosilan der Formeln IVa bzw. IVb

$$R^3\text{-}NH\text{-}(CH_2)_n\text{-}Si(R^1)_p(OR^2)_{3-p} \quad (IVa)$$

$$HS\text{-}(CH_2)_n\text{-}Si(R^1)_p(OR^2)_{3-p} \quad (IVb)$$

sind Harnstoffderivate der allgemeinen Formel V

$$OCN\text{-}R^4\text{-}NH\text{-}CO\text{-}X\text{-}(CH_2)_n\text{-}Si(R^1)_p(OR^2)_{3-p} \quad (V)$$

zugänglich, die durch Umsetzung im wesentlichen sämtlicher freien Aminogruppen oder Carboxylgruppen eines Polyamids bzw. carboxylterminierten Polyamids der Formeln VIa bzw. VIb

$$Polyamid(NH_2)_x \quad (VIa)$$

$$Polyamid(COOH)_x \quad (VIb)$$

zu einem trialkoxysilanterminierten Polyamid der Formel VIIa bzw. VIIb

4

Polyamid[NH-CO-NHR$^4$-NH-CO-X-(CH$_2$)$_n$-Si(R$^1$)$_p$(OR$^2$)$_{3-p}$-]$_x$     (VIIa)

Polyamid[CO-NH-R$^4$-NH-CO-X-(CH$_2$)$_n$-Si(R$^1$)$_p$(OR$^2$)$_{3-p}$-]$_x$     (VIIb)

wobei

R$^1$     eine C$_1$-C$_4$-Alkylgruppe, insbesondere C$_1$-C$_2$-Alkylgruppe,

R$^2$     ein Rest aus der von C$_1$-C$_4$-Alkyl, insbesondere C$_1$-C$_2$-Alkyl, und Alkoxyalkylen mit 2 bis 4 Kohlenstoffatomen gebildeten Gruppe,

R$^4$     C$_5$-C$_{14}$-Alkylen, Arylen, Diarylenalkan oder dialkylen-substituiertes Aryl,

n     eine Zahl von 1 bis 4,

p     eine Zahl von 0,1 oder 2,

X     -NR$^3$- oder -S-

wobei R$^3$ Wasserstoff, C$_1$-C$_4$-Alkyl, Aryl, oder ein Rest der Formel

-(CH$_2$)$_n$-Si(R$^1$)$_p$(OR$^2$)$_{3-p}$,

ist, und

x     eine Zahl, die für die Polyamide Amin- bzw. Säurezahlen zwischen 5 und 50 ergibt,

bedeuten, reagieren.

Gemäß P 37 14 763, auf deren Inhalt hier ausdrücklich Bezug genommen wird, können als Polyamide Homopolyamide, Copolyamide, Polyamid-Legierungen, sogenannte elastomere Polyamide sowie Polyamide mit einem Gehalt an anderen Thermoplasten eingesetzt werden. Mit anderen Worten gesagt, handelt es sich hierbei um folgende Grundtypen:

- aliphatische Homo- oder Copolyamide,
- aliphatisch-aromatische Homo- oder Copolyamide,
- amorphe Polyamide,
- elastomere Polyamide,
- Mischungen verschiedener Polyamide oder
- Polyamid-Legierungen, welche mindestens 50 Gew.-% Polyamide enthalten.

Geeignete aliphatische Polyamide sind z.B. von Aminosäuren, Lactamen oder aliphatischen Dicarbonsäuren der Formel HOOC-(CH$_2$)$_n$-COOH mit Diaminen H$_2$N(CH$_2$)$_n$-NH$_2$ ab, wobei n 4 bis 13 bedeutet. Geeignete elastomere Polyamide können aus Polyamid-und Polyether-Blöcken zusammengesetzt sein, wobei die Polyamid- und die Polyether-Blöcke z.B. durch Ester oder Aminbindungen oder unter Verwendung eines Di-isocyanats oder Di-epoxids verknüpft sind.

Amorphe Polyamide sollen vorzugsweise einen Glasumwandlungspunkt unter 200 °C aufweisen.

Die Copolyamide können beispielsweise aus aliphatischen, aromatischen und/oder verzweigtkettigen Monomeren sowie aus Monomeren mit zusätzlichen Heteroatomen, welche keine polyamidbildende Funktion ausüben, aufgebaut sein. Die als Ausgangsstoff zu verwendenden Polyamide können freie Amino und/oder Carboxylgruppen enthalten. Sie können auch polyamidbildungsinerte Endgruppen sowie in der Kette neben aliphatischen Kettengliedern und Amidgruppen noch sekundäre Aminogruppen sowie andere Gruppen mit Heteroatomen wie -O-, -S-, -SO$_2$-, -NCH$_3$- oder -CO- enthalten.

Für die Herstellung feuchtigkeitsvernetzender Schmelzkleber gemäß P 37 14 763 sind insbesondere die folgenden (Co)polyamide geeignet (PA = Polyamid): PA-6, PA-11, PA-12, PA-66, PA-69, PA-6.10, PA-6.12, PA-6.13, amorphes PA gemäß US-B 4 233 145 oder US-B 4 268 661, amorphes PA aus Isophthalsäure, Hexandiamin und gegebenenfalls anderen Polyamid-Monomeren, transparentes Polyamid aus Trimethylhexamethylendiamin und Terephthalsäure, weitere bekannte transparente Polyamide, elastomere Polyamide mit einem Teil kristallinen Polyamid-Anteil aus z.B. PA-6, PA-11 oder PA-12, welche z.B. über Amid- oder Esterverbindungen mit einem Polyether-Block verknüpft sein können, wobei der Polyether-Block bevorzugt die Struktur -(O-(CH$_2$)$_4$-)$_n$, n = 2 - 50, aufweist oder wobei die Sauerstoffatome durch Isopropylgruppen verknüpft sind.

Carboxyl-terminierte Polyamide der Formel (VIIb) werden wie amino-terminierte Polyamide hergestellt, jedoch mit einem Überschuß an Dicarbonsäure, vgl. Houben-Weyl, Bd. 14/2, Thieme-Verlag, sowie Ullmanns Enzyklopädie der technischen Chemie, Bd. 19, Verlag Chemie 1980.

Gemäß bevorzugten Ausführungsformen der DE-A 37 14 763 weist das Polyamid der Formel (VIa) Aminzahlen zwischen 5 und 50 auf. Polyamide der Formel (VIb) weisen vorzugsweise Säurezahlen zwischen 5 und 50 auf.

Bevorzugt werden gemäß DE-A 37 14 763 die Polyamide der Formel (VIa) aus durch Polymerisation ungesättigter Fettsäuren mit 12 bis 22 Kohlenstoffatomen bzw. Estern derselben mit C1-C4-aliphatischen Alkoholen gebildeten dimeren Fettsäuren hergestellt; dies sind Polyamide, wie sie in der EP-A 00 61 119 beschrieben sind, deren Offenbarung hier eingeschlossen ist.

Die Trialkoxy-alkylenamino-silane der allgemeinen Formel (IVa) sind insbesondere solche, die nur eine Aminogruppe aufweisen. Typische Beispiele sind

gamma-Aminopropyltrimethoxysilan,
gamma-Aminopropyltriethoxysilan,
N-Methyl-gamma-aminopropyltrimethoxysilan,
N-Cyclohexyl-gamma-aminopropyltrimethoxysilan,
N-n-Octyl-gamma-aminopropyltrimethoxysilan,
N-Phenyl-gamma-aminopropyltrimethoxysilan,
Di-[1-propyl-3(trimethoxysilyl)]-amin und
N-Methyl-gamma-aminopropylmethyl-dimethoxysilan.

Typische Vertreter der Mercaptosilanester der allgemeinen Formel (IVb) sind Mercaptopropyl-trimethoxysilan und Mercaptopropyl-triethoxysilan.

Außer Methoxy- und Ethoxysilanen sind auch andere Alkoxysubstituenten, insbesondere die Monomethylether von Glykolen wie Ethylen- oder Diethylenglykol und dergleichen verwendbar.

Die Reaktion der Harnstoffderivate der Formel (V) mit den Polyamiden der Formeln (VIa) und (VIb) erfolgt in einer Schmelze der Polyamide.

Die feuchtigkeitsvernetzenden Schmelzkleber gemäß DE-A 37 14 763 können saure Katalysatoren enthalten, die aus der von Zinn-II-octoat, Dibutylzinn-dilaurat, Tetrabutyl-titanat, Zinkacetat und Zinkacetylacetonat gebildeten Gruppe ausgewählt sind. Derartige Katalysatoren sind üblich, vgl. z.B. Ullmann, Enzyklopädie der technischen Chemie, Bd. 21, Seite 523 ff oder E. Skeist, Handbook of Adhesives, van Nostrand, 1976, Seite 630.

Gemäß einem weiteren vorteilhaften Merkmal können die feuchtigkeitsvernetzenden Schmelzkleber gemäß De-A 37 14 763 einen Gehalt an 0 bis 50 Gew.-%, bezogen auf Trialkoxysilanterminiertes Polyamid der Formeln (Va) bzw. (Vb), gegenüber diesem inerte Harze aufweisen. Diese Harze und Weichmacher sind ebenfalls üblich, vgl. B.E. Skeist, Handbook of Adhesives, van Nostrand, 1976.

Besonders bevorzugt werden im Rahmen der Erfindung weiterhin feuchtigkeitsvernetzende Schmelzklebstoffe

Besonders bevorzugt sind weiterhin im Rahmen der Erfindung Schmelzklebstoffe der älteren deutschen Anmeldung P 38 27 464 vom 12. August 1988, auf deren Inhalt hier ausdrücklich bezuggenommen wird. Sie betrifft alkoxysilanterminierte, feuchtigkeitsvernetzende Schmelzkleber, die durch Umsetzung von

a) NCO-terminierten Silanverbindungen der Formel VIII

$$OCN-R^5-NHCO-(O-R^7-O-CONH-R^6-NHCO)_m-X-(CH_2)_n-Si(R^1)_p(OR^2)_{3-p} \qquad (VIII)$$

in der
$R^1$ eine Alkylgruppe mit 1 bis 4 Kohlenstoffatomen,
$R^2$ einen Rest aus der von Alkyl mit 1 bis 4 Kohlenstoffatomen und Alkoxyalkylen mit 2 bis 5 Kohlenstoffatomen,
$R^5$ und $R^6$ einen Rest aus der von acyclischem oder cyclischem Alkylen mit 5 bis 14 Kohlenstoffatomen, Arylen, Diarylenalkan und dialkylensubstituiertem Aryl gebildeten Gruppe,
$R^7$ einen Alkylenrest mit 2 bis 12 Kohlenstoffatomen und
m die Zahl 0 oder 1,
n eine Zahl von 1 bis 4,
p die Zahl 0, 1 oder 2 und
X eine Gruppe der Formel -S- oder -NR⁸-, in der R⁸ Waserstoff, Alkyl mit 1 bis 4 Kohlenstoffatomen, Aminoethylen, Aryl oder einen Rest der Formel

$$-(CH_2)_n-Si(R^1)_p(OR^2)_{3-p}$$

in der $R^1$, $R^2$, m und p wie oben definiert sind,
bedeuten,
mit

b) linearen OH- und/oder NH₂-terminierten difunktionellen Polymeren mit OH- bzw. NH₂-Zahlen im Bereich von 6 bis 20, insbesondere 8 bis 15, erhältlich durch Umsetzung von linearen OH- und/oder NH₂-terminierten Polyestern, Polyethern und/oder Polyurethanen mit Diisocyanaten der Formel IX

OCN-R$^9$-NCO    (IX)

in der R$^9$ wie R$^5$ und R$^6$ definiert ist, bzw. Mischungen derselben,
in Molverhältnissen von OH- und/oder NH$_2$-Gruppen der difunktionellen Polymeren zu NCO-Gruppen der NCO-terminierten Silanverbindungen der Formel I von 0,9:1 bis 2:1, insbesondere etwa 1:1, erhältlich sind.

Wie aus der allgemeinen Formel VIII erkennbar, leiten sich die Reste R$^5$ bzw. R$^6$ von Diisocyanaten der Formeln OCN-R$^5$-NCO bzw. OCN-R$^6$-NCO ab, wobei R$^5$ und R$^6$ gleich oder verschieden sein können. Typische Beispiele für derartige Diisocyanate sind Toluylendiisocyanate(TDI), insbesondere technische Gemische des 2,4- und 2,6-Isomeren, Diphenylmethandiisocyanat(MDI), 1,6-Hexamethylendiisocyanat, Naphthylendiisocyanat, Xylylendiisocyanat, Isophorondiisocyanat (2,4,4-Trimethyl-1,6-diisocyanato-hexan, IPDI), dimeres Toluylendiisocyanat-2,4 sowie Cyclohexylendiisocyanat und Dicyclohexylmethandiisocyanat. Bevorzugt bedeuten R$^1$ und R$^3$ Reste aus der von Toluylen, Hexamethylen, Naphthylen, Xylylen, Cyclohexylen, Diphenylenmethan und Isophoronylen gebildeten Gruppe.

Besonders bevorzugt ist es, bei den Schmelzklebern gemäß P 38 37 464, wenn sich die Reste R$^5$ und R$^6$ von Diisocyanaten der Formel OCN-R$^5$-NCO bzw. OCN-R$^6$-NCO ableiten, deren Isocyanatgruppen unterschiedliche Reaktivitäten aufweisen. Bevorzugte Vertreter für derartige Diisocyanate sind Isophoronylen- und Toluylendiisocyanat (einschließlich der an dem 2,4-Isomeren-reichen technischen Gemische desselben mit dem 2,6-Isomeren).

Die Gruppe R$^7$ der allgemeinen Formel VIII ist von einem insbesondere linearen Alkylendiol mit 2 bis 12 Kohlenstoffatomen abgeleitet; insbesondere von Ethylenglykol, Butandiol-1,4, Hexandiol-1,6, Octandiol-1,8, Decandiol-1,10 und Dodecandiol-1,12. Besonders bevorzugt sind die hier genannten Alkylendiole mit 2 bis 6 Kohlenstoffatomen.

Die Gruppe R$^1$ kann eine Methyl-, Ethyl-, Propyl- oder Butylgruppe sein; Methyl- oder Ethylgruppen sind hier bevorzugt.

Die Gruppe R$^2$ kann eine Methyl-, Ethyl-, Propyl- oder Butylgruppe bzw. eine Alkoxyalkylengruppe wie Methoxymethylen, Methoxyethylen oder Methoxypropylengruppe sein. Methyl- oder Ethylgruppen sind hier bevorzugt.

Die Gruppe R$^9$ kann die oben für R$^5$ und R$^6$ angegebenen Bedeutungen aufweisen; ein besonders bevorzugtes Diisocyanat der Formel IX ist Diphenylmethandiisocyanat (4,4'-Diisocyanatodiphenylmethan; MDI), das temperaturresistente "Hartsegmente" in den Schmelzklebern ergibt.

Die Gruppe X der allgemeinen Formel VIII kann die oben angegebenen Bedeutungen aufweisen; im Falle von X = -NR$^8$- kann R$^8$ Wasserstoff, Alkyl mit 1 bis 5 Kohlenstoffatomen, insbesondere Methyl, Ethyl, Propyl und Butyl, Aminoethylen, Aryl, insbesondere Phenyl, oder einen Rest der obigen Formel II bedeuten, wobei im letzteren Falle die Bedeutungen bzw. Werte für R$^1$, R$^2$, m und p die gleichen sind wie für die Silanfunktion gemäß der allgemeinen Formel VIII.

NCO-terminierte Silanverbindungen der Formel VIII können erhalten werden, indem man eine Silanverbindung der allgemeinen Formel X

HX-(CH$_2$)$_n$-Si(R$^1$)$_p$(OR$^2$)$_{3-p}$    (X)

in der R$^1$, R$^2$, X, n und p wie oben definiert sind, mit Diisocyanaten der Formel

OCN-R$^5$-NCO bzw.
OCN-R$^5$-NHCO-O-R$^7$-O-CONH-R$^6$-NCO

umsetzt, wobei R$^5$, R$^6$ und R$^7$ wie oben definiert sind. Besonders bevorzugte Bedeutungen für die Silanverbindungen der Formel X sind R$^1$ = R$^2$ = Methoxy und/oder Ethoxy, n = 3, p = 0 oder 1 und X = -NH- oder S. Typische Beispiele für Silanverbindungen der allgemeinen Formel X sind
gamma-Aminopropyltrimethoxysilan,
gamma-Aminopropyltriethoxysilan,
N-Methyl-gamma-aminopropyltrimethoxysilan,
N-Phenyl-gamma-aminopropyltrimethoxysilan,
Di-[1-propyl-3(trimethoxysilyl)]-amin und
N-Methyl-gamma-aminopropylmethyl-dimethoxysilan.

Diese Verbindungen sind im Handel erhältlich.
Die für die Umsetzung mit den NCO-terminierten Silanverbindungen der Formel VIII vorgesehenen linearen OH- und/oder NH$_2$-terminierten Polymeren mit OH- bzw. NH$_2$-Zahlen im Bereich von 6 bis 20, insbesondere 8 bis 15, können durch Umsetzung von linearen OH- und/oder $NH_2$-terminierten Polyestern, Polyethern und/oder Polyurethanen mit Diisocyanaten der Formel XI

OCN-$R^9$-NCO      (XI)

in der $R^9$ wie oben definiert ist bzw. Mischungen derselben erhalten werden, wobei die Molverhältnisse von OH- und/oder $NH_2$-Gruppen zu NCO-Gruppen 1,2:1 bis 1,8:1 vorzugsweise 1,4:1 bis 1,6:1 betragen.

Typische Vertreter für lineare OH-terminierte Polyester zur Herstellung von Schmelzklebern gemäß DE-38 27 464 sind solche, die durch Kondensation von Dicarbonsäuren aus der von Oxal-, Malon-, Dimethylmalon-, Bernstein-, Glutar-, Adipin-, Trimethyladipin-, Pimelin-, 2,2-Dimethylglutar-, Azelain-, Sebacin-, Fumar-, Malein-, Itacon-, 1,3-Cyclopentandicarbon-, 1,2-Cyclohexandicarbon-, 1,3-Cyclopentandicarbon-, 1,4-Cyclohexandicarbon-, Phthal-, Terephthal-, Isophthal-, 2,5-Norbornandicarbon-, 1,4-Naphthalindicarbon-, Diphen-, 4,4'-Oxydibenzoe-, Diglykol-, Thiodipropion-, 4,4'-Sulfonyldibenzoe-, 2,5-Naphthalindicarbon- und Tricyclodecandicarbonsäure sowie Estern, Säurehalogeniden oder Anhydriden derselben gebildeten Gruppe mit Diolen aus der von Ethan-, Propan-1,2-, Propan-1,3-, Butan-1,2-, Butan-1,4-, Pentan-1,2-, Pentan-1,4-, Pentan-2,4-, Hexan-1,2-, Hexan,1,5-, Hexan-1,6-, Hexan-2,5-, Heptan-1,7- und Octan-1,8-diol, Neopentylglykol sowie von 1,2-, 1,3- und 1,4-Cyclohexandimethanol gebildeten Gruppe erhältlich sind. Besonders bevorzugt sind hier teilkristalline, flüssige oder amorphe Polyester einschließlich Mischungen derselben auf Basis von Terephthal-, Isophthal-, Malon-, Bernstein-, Glutar- und/oder Adipinsäure einerseits und Ethylenglykol, Diethylenglykol, Propylenglykol, Butandiol-1,4, Hexandiol-1,6 und/oder Neopentylglykol andererseits, die OH-Zahlen zwischen 5 bis 200, vorzugsweise 10 bis 100 und besonders bevorzugt 15 bis 60 aufweisen. Diese OH-terminierten Polyester sind im Handel erhältlich. Zu den obengenannten linearen OH-terminierten Polyethern gehören insbesondere Polyalkylenglykole wie Polyethylenglykol, Polypropylenglykol und Polytetrahydrofuran mit Zahlenmitteln der Molmassen zwischen 400 und 5000.

Von den obengenannten $NH_2$-terminierten Polyethern sind insbesondere $NH_2$-terminierte Polypropylenglykole mit Zahlenmitteln der Molmassen zwischen 200 und 3000 bevorzugt. Im übrigen können hier auch OH-terminierte, lineare Polyurethane eingesetzt werden, die aus Diisocyanaten der obengenannten Art mit einem Überschuß an Diolen der obengenannten Art erhältlich sind.

Lineare OH- und/oder $NH_2$-terminierte Polymere mit OH- bzw. $NH_2$-Zahlen im Bereich von 6 bis 20, insbesondere 8 bis 15, sind bekannte Produkte, die größtenteils im Handel erhältlich sind. Wenn sie - was in vielen Fällen bevorzugt ist - in Form von Gemischen eingesetzt werden, reicht es aus, wenn das Gesamtgewicht die vorgenannten OH- bzw. $NH_2$-Zahlen aufweist, so daß auch gewisse Anteile an OH- und/oder $NH_2$-terminierten Polymeren zugesetzt werden können, deren OH- bzw. $NH_2$-Zahlen außerhalb der vorgenannten Bereiche liegen.

Besonders bevorzugt ist es zur Herstellung von Schmelzklebern gemäß P 38 27 464, als lineare OH-terminierte Polymere Umsetzungsprodukte von Isocyanaten der allgemeinen Formel IX mit Gemischen von

    a) linearen OH-terminierten Polyestern und
    b) linearen OH-terminierten Polyethern

in Gewichtsverhältnissen von a:b von 20:80 bis 99:1, vorzugsweise 50:50 bis 90:10 und insbesondere 80:20 bis 88:12 einzusetzen; die damit letztlich erhältlichen Schmelzkleber weisen im ausgehärteten Zustand eine verbesserte Dehnbarkeit und Adhäsion auf.

Die alkoxysilanterminierten feuchtigvernetzenden Schmelzkleber gemäß P 38 27 464 können hergestellt werden, indem man die linearen OH- und/oder $NH_2$-terminierten Polymeren mit OH- bzw. $NH_2$-Zahlen im Bereich von 6 bis 20, insbesondere von 8 bis 15, vorlegt und die NCO-terminierten Silanverbindungen der Formel IX in den angegebenen Molverhältnissen von OH- und/oder $NH_2$-Gruppen der difunktionellen Polymeren zu NCO-Gruppen der Silanverbindungen der Formel IX zusetzt sowie unter erhöhten Temperaturen zur Reaktion bringt, bis der Anteil an freien NCO-Gruppen im Reaktionsgemisch auf 0 bzw. nahezu 0 abgesunken ist.

Die so erhaltenen alkoxysilanterminierten feuchtigkeitsvernetzenden Schmelzkleber gemäß P 38 27 464 Erfindung können mit üblichen sauren Katalysatoren versetzt werden, die z.B. aus der von Zinn-II-octoat, Dibutylzinn-dilaurat, Tetrabutyltitanat, Zinkacetat und Zinkacetylacetonat oder dergleichen gebildeten Gruppe ausgewählt sind; derartige Katalysatoren sind em Fachmann geläufig, vgl. z.B. Ullmann, Enzyklopädie der technischen Chemie, Band 21, Seite 523 ff. oder E. Skeist, Handbook of Adhesives, van Nostrand, 1976, Seite 630.

Schließlich betrifft die Erfindung über terminale NCO- und/oder Alkoxysilangruppen aushärtende, unter Feuchtigkeitseinwirkung nachvernetzende Schmelzkleber mit einem Gehalt an gebundenes Wasser enthaltenden Substanzen der oben beschriebenen Art.

Die Erfindung wird im folgenden anhand bevorzugter Ausführungsbeispiele näher erläutert.

A. Herstellung von NCO- bzw. silanterminierten Klebstoffen.

1. Herstellung eines NCO-terminierten Polyurethans (Klebstoff Nr. 1).

Unter Schutzgas und Rühren wurden 176 g (50 mmol) eines Polyesters aus Adipinsäure und Hexandiol (Molekulargewicht ca. 3520) und zur Entfernung von Restfeuchtigkeit 30 min bei 110°C evakuiert. Man kühlte auf 80°C ab und fügte ein Gemisch aus 23 g (93 mol) 4,4-Diaminodiphenylmethan und 5,8 g (10 mmol) trimerisiertes Hexamethylendiisocyanat (handelsüblich) hinzu. Dabei wurde die Temperatur innerhalb von 1,5 Stunden auf 120°C erhöht. Danach betrug der NCO-Gehalt 2,2 % (Theorie, 2,3 %); die Reaktion wurde hier beendet.

2. Herstellung eines alkoxysilanterminierten Polyurethans (Klebstoff Nr. 2, gemäß Beispiel 4, P 38 27 464).

Unter Schutzgas und Rühren wurden bei 60°C 50 mmol(50 g) PTHF 1000 bei 60°C vorgelegt und zur Entfernung von Restfeuchtigkeit 30 min evakuiert. Hierzu wurden 100 mmol (25 g) MDI zugegeben und die Temperatur auf 80°C erhöht. Nach ca. 1 h war der theoretische NCO-Wert erreicht. Anschließend wurden 100 mmol (37,3 g) Polyester zugegeben. Bei kontinuierlicher Temperaturerhöhung bis auf 120°C wurde so lange gerührt, bis der NCO-Wert weniger als 0,1% betrug. Anschließend wurden 100 mmol (41,8 g) eines Adduktes von äquimolaren Mengen gamma-Mercaptopropyl-trimethoxysilan und IPDI zugegeben; unter Erhöhung der Temperatur auf 160°C wurde so lange gerührt, bis der NCO-Wert weniger als 0,1% betrug. Nach Zugabe von 1 Gew.-% (4,9 g) Dibutylzinndilaurat und Homogenisierung wurde abgekühlt und die Reaktion beendet.

3. Herstellung eines alkoxysilanterminierten Polyurethans (Klebstoff Nr. 3, gemäß DE-A 37 14 763, Beispiel 1).

a) Herstellung eines Diisocyanat/Aminoalkoxysilan-Adduktes.

In einem Rührreaktor wurden unter Schutzgas 222 Gew.-Teile Isophoron-Diisocyanat vorgelegt und 222 Gew.-Teile gamma-Aminopropyl-triethoxysilan so rasch zugetropft, daß die Innentemperatur bei Kühlung 40°C nicht überschritt. Die Viskosität des Produktes betrug 300 Pa.s, die NCO-Zahl 9,2.

b) Herstellung eines Trialkoxysilan-terminierten Polyamids

25 Gew.-Teile eines Polyamids aus Dimerfettsäure und Ethylendiamin (Aminzahl 35 bis 50, Erweichungspunkt 93°C, DIN 52 011) wurden bei 120°C aufgeschmolzen und 1 h zur Entfernung von Feuchtigkeit evakuiert. Unter Schutzgas wurden dann 8,4 Gew.-Teile des Reaktionsproduktes aus Beispiel 1a zugegeben. Nach 45 min war die NCO-Zahl auf 0 abgesunken und die Reaktion somit beendet.
Danach wurden 0,33 Gew.-Teile Dibutylzinn-dilaurat bis zur Homogenität untergerührt.

B. Herstellung von wasserhaltigen Substanzen (Härtern).

Die im folgenden angegebenen Bestandteile wurden mechanisch vermischt.

Härter 1:

17 g eines handelsüblichen, zu 100 % mit Wasser gesättigten Zeoliths (Typ A, Durchmesser der Adsorptionshohlräume ca. 4 Å)
17 g handelsübliches Toluolsulfonat (Weichmacher)
66 g handelsübliches Coumaron-Inden-Harz.

Härter 2:

50 g Zeolith gemäß Härter 1, vollständig mit Wasser gesättigt
50 g Weichmacher gemäß Härter 1.

Härter 3:

34 g Zeolith gemäß Härter 1, zu 75 % mit Wasser gesättigt
66 g Weichmacher gemäß Härter 1.

Härter 4:

Zeolith gemäß Härter 12, vollständig mit Wasser gesättigt.

Härter 5:

25 g Zeolith gemäß Härter 1, vollständig mit Wasser gesättigt.
25 g Weichmacher gemäß Härter 1
50 g Coumaron-Inden-Harz.

Härter 6:
35 g Zeolith gemäß Härter 1, vollständig mit Wasser gesättigt
65 g Weichmacher gemäß Härter 1.

Härter 7:

25 g Zeolith gemäß Härter 1, vollständig mit Wasser gesättigt
25 g Weichmacher gemäß Härter 1
50 g Coumaron-Inden-Harz.

Härter 8:

34 g Zeolith gemäß Härter 1, vollständig mit Wasser gesättigt
66 g Weichmacher gemäß Härter 1.

Härter 9:

50 g Zeolith gemäß Härter 1, zu 75 % mit Wasser gesättigt
50 g Weichmacher gemäß Härter 1.

Zur Herstellung der Schmelzkleber der Erfindung wurden die Klebstoffe Nr. 1 bis 3 mit den oben angegebenen Härtern Nr. 1 bis 9 in den aus Tabelle 1 ersichtlichen Verhältnissen in einer 2-Komponenten-Misch- und Dosieranlage mit Statikmischkopf unmittelbar vor der Applikation vermischt und auf sandgestrahlte Aluminiumsubstrate aufgetragen. Die Wärmestandfestigkeit (in °C) nach 7 Tagen sowie die Zugscherfestigkeit nach 7 Tagen nach DIN 53 283 bei Raumtemperatur und 100°C wurden ermittelt; die Ergebnisse sind in Tabelle 1 zusammengefaßt.

Tabelle 1

| Klebstoff Nr. Menge (g) | Härter Nr. Menge (g) | Wärmestandfestigkeit (°C, nach 7 Tagen) | Zugscherfestigkeit (20°C) | DIN 53 283 [MPa] (100°C) |
|---|---|---|---|---|
| 1/5 | - | 120 | 8,4 | 0,5 |
| 1/5 | 1/1,52 | 158 | 10,2 | 0,4 |
| 1/5 | 2/0,52 | 195 | 13,0 | 0,9 |
| 1/5 | 3/1,52 | 194 | 9,6 | 1,0 |
| 1/5 | 4/0,55 | 192 | 16,0 | 1,1 |
| 2/5 | - | 65 | 7,0 | - |
| 2/5 | 5/1,02 | 82 | 6,1 | - |
| 2/5 | 6/0,77 | 165 | 7,8 | 0,3 |
| 2/5 | 3/1,55 | 148 | 7,5 | 0,2 |
| 2/5 | 4/0,55 | >200 | 9,1 | 1,0 |
| 3/5 | - | 127 | 13 | 0,3 |
| 3/5 | 7/2,0 | 90 | 15 | 0,3 |
| 3/5 | 8/1,5 | 178 | 9 | 0,6 |
| 3/5 | 9/2,0 | 199 | 11 | 1,1 |
| 3/5 | 4/1,0 | >200 | 17 | 2,3 |

## Patentansprüche

1. Verfahren zur Herstellung von unter Feuchtigkeitseinwirkung nachvernetzenden Schmelzkleber massen, die über terminale NCO- und/oder Alkoxysilangruppen aushärten, dadurch gekennzeichnet, daß man den Schmelzkleber massen unmittelbar vor der Applikation eine Wasser in bei Arbeitstemperatur reversibler chemischer oder adsorptiver Bindung enthaltende Substanz oder mehrere zumischt.

2. Verfahren nach mindestens einem der Ansprüche 1 bis 4, dadurch gekennzeichnet, daß man die Wasser in reversibler Bindung enthaltenden Substanzen den Schmelzkleber massen in einer Menge entsprechend einem molaren Verhältnis von reversibel gebundenem Wasser zu terminalen NCO- bzw. Alkoxysilangruppen von 0,6 : 1 bis 10 : 1 zusetzt.

3. Verfahren nach Anspruch 1 oder 2, dadurch gekennzeichnet, daß man Wasser in chemischer Bindung enthaltende Substanzen aus der von Kristallwasser enthaltenden Oxiden, Hydroxiden und Salzen der Alkali- und Erdalkalimetalle, der Metalle der dritten Hauptgruppe und der Nebengruppenelemente gebildeten Gruppe verwendet.

4. Verfahren nach Anspruch 1 oder 2, dadurch gekennzeichnet, daß man Wasser in adsorptiver Bindung enthaltende Substanzen aus der von wasserbeladenen Molekularsieben, Polyamiden, insbesondere Polyacrylamiden, Polyvinylpyrrolidon, Polyurethanen, Cellulosederivaten und Stärkederivaten gebildeten Gruppe verwendet.

5. Verfahren nach mindestens einem der Ansprüche 1 bis 4, dadurch gekennzeichnet, daß man die Wasser in reversibler Bindung enthaltenden Substanzen in Mischung mit mit den Schmelzkleber massen verträglichen Harzen und/oder Weichmachern zusetzt.

6. Verfahren nach mindestens einem der Ansprüche 1 bis 5, dadurch gekennzeichnet, daß man als über terminale NCO-Gruppen aushärtende Schmelzkleber massen Polyurethanprepolymere verwendet.

7. Verfahren nach mindestens einem der Ansprüche 1 bis 5, dadurch gekennzeichnet, daß man als über terminale Alkoxysilangruppen und/oder NCO-Gruppen aushärtende Schmelzkleber massen thermoplastische Polymere mit Isocyanat- oder Alkoxysilanendgruppen verwendet.

8. Verfahren nach mindestens einem der Ansprüche 1 bis 7, dadurch gekennzeichnet, daß man thermoplastische Polymere verwendet, die Alkoxysilanendgruppen der Formel I

$$-X-(CH_2)_n-Si(R^1)_p(OR^2)_{3-p} \qquad (I)$$

in der

X eine Gruppe der Formel -S- oder -NR$^3$-, wobei R$^3$ Wasserstoff, Alkyl mit 1 bis 4 Kohlenstoffatomen, Aminomethylen, Aryl oder einen Rest der Formel II

$$-(CH_2)_n-Si(R^1)_p(OR^2)_{3-p} \qquad (II)$$

n eine Zahl von 1 bis 4,
p die Zahl 0, 1 oder 2,
R$^1$ eine Alkylgruppe mit 1 bis 4 Kohlenstoffatomen
und
R$^2$ einen Rest aus der von Alkyl mit 1 bis 4 Kohlenstoffatomen und Alkoxyalkylen mit 2 bis 4 Kohlenstoffatomen gebildeten Gruppe
bedeuten,
enthalten.

9. Über terminale NCO- und/oder Alkoxysilangruppen aushärtende, unter Feuchtigkeitseinwirkung nachvernetzende Schmelzklebermassen mit einem Gehalt an gebundenes Wasser enthaltenen Substanzen, erhältlich nach einem der Ansprüche 1 bis 8.

10. Verfahren nach Anspruch 4, dadurch gekennzeichnet, daß die Wasser in adsorptiver Bindung enthaltende Substanzen lufttrocken sind.

12

**11.** Verfahren nach Anspruch 2, dadurch gekennzeichnet, daß das molare Verhältnis von reversibel gebundenem Wasser zu terminalen NCO-bzw. Alkoxysilangruppen 0,8 : 1 bis 3 : 1 beträgt.

**Claims**

**1.** A process for the production of moisture-post-curing hotmelt adhesives which cure through terminal NCO and/or alkoxysilane groups, characterized in that one or more substances containing water in chemically or adsorptively bound form reversible at the application temperature is/are added to the hotmelt adhesives immediately before application.

**2.** A process as claimed in at least one of claims 1 to 4, characterized in that the substances containing water in reversibly bound form are added to the hotmelt adhesives in a quantity corresponding to a molar ratio of reversibly bound water to terminal NCO or alkoxysilane groups of 0.6:1 to 10:1.

**3.** A process as claimed in claim 1 or 2, characterized in that substances containing water in chemically bound form from the group consisting of oxides, hydroxides and salts - containing water of crystallization - of the alkali metals and alkaline earth metals, metals of the third main group and the secondary group elements are used.

**4.** A process as claimed in claim 1 or 2, characterized in that substances containing adsorptively bound water from the group consisting of water-laden molecular sieves, polyamides, more particularly polyacrylamides, polyvinyl pyrrolidone, polyurethanes, cellulose derivatives and starch derivatives are used.

**5.** A process as claimed in at least one of claims 1 to 4, characterized in that the substances containing water in reversibly bound form are added in admixture with resins and/or plasticizers compatible with the hotmelt adhesives.

**6.** A process as claimed in at least one of claims 1 to 5, characterized in that polyurethane prepolymers are used as the hotmelt adhesives curing through terminal NCO groups.

**7.** A process as claimed in at least one of claims 1 to 5, characterized in that isocyanate- or alkoxysilane-terminated thermoplastic polymers are used as the hotmelt adhesives curing through terminal alkoxysilane groups and/or NCO groups.

**8.** A process as claimed in at least one of claims 1 to 7, characterized in that thermoplastic polymers containing terminal alkoxysilane groups corresponding to formula I

$$-X-(CH_2)_n-Si(R^1)_p(OR^2)_{3-p} \qquad (I)$$

in which

X $\qquad$ is a group corresponding to the formula -S- or -NR$^3$, where R$^3$ is hydrogen, $C_{1-4}$ alkyl, aminomethylene, aryl or a group corresponding to formula II

$$-(CH_2)_n-Si(R^1)_p(OR^2)_{3-p} \qquad (II)$$

n $\qquad$ is a number of 1 to 4,
p $\qquad$ is the number 0, 1 or 2,
R$^1$ $\qquad$ is a $C_{1-4}$ alkyl group and
R$^2$ $\qquad$ is a radical from the group consisting of $C_{1-4}$ alkyl and $C_{2-4}$ alkoxyalkylene,
are used.

**9.** Hotmelt adhesives with a content of substances containing bound water which cure through terminal NCO and/or alkoxysilane groups and which post-cure under the effect of moisture, obtainable by the process claimed in any of claims 1 to 8.

EP 0 371 370 B1

**10.** A process as claimed in claim 4, characterized in that the substances containing adsorptively bound water are air-dry.

**11.** A process as claimed in claim 2, characterized in that the molar ratio of reversibly bound water to terminal NCO or alkoxysilane groups is from 0.8:1 to 3:1.

**Revendications**

**1.** Procédé de fabrication de masses adhésives à fusion réticulant ultérieurement sous l'action de l'humidité, qui durcissent via des groupes NCO et/ou alcoxysilane terminaux, caractérisé en ce que l'on ajoute une substance renfermant de l'eau en liaison chimique ou adsorptive, réversible à la température de mise en oeuvre, aux masses adhésives à fusion immédiatement avant l'application.

**2.** Procédé selon au moins l'une des revendications 1 à 4, caractérisé en ce que l'on ajoute les substances renfermant de l'eau en liaison réversible aux masses adhésives à fusion, dans une proportion correspondant à un rapport molaire entre l'eau fixée de manière réversible et les groupes NCO ou alcoxysilane terminaux de 0,6:1 à 10:1.

**3.** Procédé selon la revendication 1 ou 2, caractérisé en ce que l'on utilise des substances renfermant de l'eau en liaison chimique, faisant partie du groupe formé des oxydes, hydroxydes et sels des métaux alcalins et alcalino-terreux, des métaux du troisième groupe principal et des éléments du sous-groupe correspondant, renfermant de l'eau de cristallisation.

**4.** Procédé selon la revendication 1 ou 2, caractérisé en ce que l'on utilise des substances renfermant de l'eau en fixation adsorptive, faisant partie du groupe formé des tamis moléculaires, des polyamides, en particulier des polyacrylamides, polyvinylpyrrolidone, polyuréthanes, dérivés de la cellulose et de l'amidon chargés d'eau.

**5.** Procédé selon au moins l'une des revendications 1 à 4, caractérisé en ce que l'on ajoute les substances renfermant de l'eau en liaison réversible en mélange avec des résines et/ou plastifiants compatibles avec les masses adhésives à fusion.

**6.** Procédé selon au moins l'une des revendications 1 à 5, caractérisé en ce que l'on utilise comme masses adhésives à fusion durcissant via les groupes NCO terminaux, des prépolymères de polyuréthane.

**7.** Procédé selon au moins l'une des revendications 1 à 5, caractérisé en ce que l'on utilise comme masses adhésives à fusion durcissant via les groupes alcoxysilane et/ou NCO terminaux, des polymères thermoplastiques comportant des groupes isocyanate ou alcoxysilane terminaux.

**8.** Procédé selon au moins l'une des revendications 1 à 7, caractérisé en ce que l'on utilise des polymères thermoplastiques, qui renferment des groupes alcoxysilane terminaux de la formule I

$$-X-(CH_2)_n-Si(R^1)_p(OR^2)_{3-p} \qquad (I)$$

dans laquelle
X représente un groupe de formule -S- ou -NR$^3$-, dans laquelle R$^3$ correspond à l'hydrogène, à un groupe alkyle comportant 1 à 4 atomes de carbone, un aminométhylène, un aryle ou un radical de la formule II

$$-(CH_2)_n-Si(R^1)_p(OR^2)_{3-p} \qquad (II)$$

dans laquelle
n représente un nombre de 1 à 4, p équivaut au nombre 0, 1 ou 2, R$^1$ correspond à un groupe alkyle comportant 1 à 4 atomes de carbone et R$^2$ est un radical faisant partie du groupe formé d'un alkyle avec 1 à 4 atomes de carbone et d'un alcoxyalkylène avec 2 à 4 atomes de carbone.

14

9.  Masses adhésives à fusion durcissant ultérieurement sous l'action de l'humidité via les groupes NCO et/ou alcoxysilane terminaux contenant des substances, qui renferment de l'eau fixée, selon l'une des revendications 1 à 8.

10. Procédé selon la revendication 4, caractérisé en ce que les substances renfermant de l'eau en liaison adsorptive sont sèches à l'air.

11. Procédé selon la revendication 2, caractérisé en ce que le rapport molaire entre l'eau fixée de manière réversible et les groupes NCO ou alcoxysilane terminaux est compris entre 0,8:1 et 3:1.